# EUROPÄISCHE PATENTSCHRIFT

(11) **EP 0 885 375 B1**
(45) Veröffentlichungstag und Bekanntmachung des Hinweises auf die Patenterteilung: **15.03.2000**
(21) Anmeldenummer: 97928119.3
(22) Anmeldetag: 12.06.1997
(51) Int. Cl.: G01D 5/16, G01B 7/00

(54) **Linearantrieb mit magnetoresistiven Sensoren**
Linear drive with magnetoresistive sensors
Entraînement linéaire avec des capteurs magnétorésistifs

(30) Priorität: 14.06.1996 DE 19623742
(43) Veröffentlichungstag der Anmeldung: 23.12.1998
(73) Patentinhaber: Wittenstein Motion Control GmbH, 97999 Igersheim (DE)
(72) Erfinder: WITTENSTEIN, Manfred, D-97980 Bad Mergentheim (DE); SPOHR, Hans-Hermann, D-75365 Calw (DE)
(74) Vertreter: Patentanwalts-Partnerschaft Rotermund + Pfusch
(86) Internationale Anmeldenummer: DE9701185
(87) Internationale Veröffentlichungsnummer: WO9747949

(56) Entgegenhaltungen:
- EP-A- 0 109 296
- DE-A- 19 533 964
- GB-A- 2 205 406
- US-A- 4 725 776
- PATENT ABSTRACTS OF JAPAN vol. 6, no. 119 (E-116), 3.Juli 1982 & JP 57 046670 A (MATSUSHITA ELECTRIC IND CO), 17.März 1982,

## Beschreibung

Die Erfindung betrifft einen Linearantrieb mit einer Einrichtung zur Verschiebeweg- und/oder Positionserfassung, insbesondere bei einem kleinbauenden Linearantrieb nach dem Oberbegriff des Patentanspruchs 1.

Einrichtungen zur Verschiebeweg- und/oder Positionserfassung zweier gegeneinander verschiebbarer Teile sind in verschiedenen Ausführungsformen bereits bekannt wie beispielsweise aus DE 42 10 934 C1, DE 39 35 261 A1, DE-PS 12 62 621 und JP 2-62454 A., In: Patents Abstracts of Japan, M-976, May 21, 1990, Vol. 14, No 237.

Diese Einrichtungen besitzen insgesamt einen komplizierten Aufbau und können insbesondere auch nicht sehr klein ausgebildet werden.

Eine gattungsähnliche Einrichtung, bei der allerdings lediglich ein Sensor verwendet wird, ist aus US 4,725,776 bekannt. Mit dieser Einrichtung ist lediglich eine inkrementale Verschiebewegerfassung möglich.

Bei gattungsgemäßen Einrichtungen nach EP 0 109 296 A2 und GB 22 05 406 A ist bereits eine absolute Positionserfassung mittels magnetoresistiver Sensoren möglich. Hierfür werden dort Sensoren unterschiedlichen Profilbereichen zugeordnet. Der hierzu erforderliche konstruktive Aufwand ist groß.

Die Erfindung beschäftigt sich mit dem Problem, eine gattungsgemäße Linearantriebs-Einrichtung bei hoher Anzeigegenauigkeit möglichst klein und einfach aufgebaut auszubilden.

Eine Lösung hierzu zeigt das kennzeichnende Merkmal des Anspruchs 1 auf.

Zweckmäßige Ausgestaltungen sind Gegenstand der Unteransprüche. Anhand eines Ausführungsbeispieles werden diese noch näher erläutert werden.

Nach der Erfindung kann bei einem Linearantrieb zur Messung des Verschiebeweges und der Verschiebeposition des Verschiebeteiles dieses Antriebes insbesondere ein an dem Verschiebeteil an sich gegebenenfalls bereits vorhandene Antriebsprofil unter Verwendung eines magnetoresistiven Sensors zur Magnetfeldveränderung benutzt und diese Magnetfeldveränderung wiederum als eines von zwei Auswertekriterien zur Bestimmung des Verschiebeweges und der absoluten verschobenen Position ausgewertet werden. Das Antriebsprofil eines beispielsweise als Spindel oder Verschiebehülse ausgebildeten Verschiebeteils ist dabei entweder ein Gewinde oder eine Rillierung mit gleichen Rillenabständen. Das Rillen- bzw. Gewindeprofil ist insbesondere derart, daß in Längsrichtung möglichst in allen Bereichen gegenüber der Verschiebe-Längsachse geneigte Profilflächen vorhanden sind. Anderenfalls leidet die Meßgenauigkeit. Ideal für die erfindungsgemäße Einrichtung ist beispielsweise ein Gewinde mit einem etwa dreieckigen Gewindeprofilquerschnitt bei direkter Aneinanderreihung der Profildreiecke in Verschiebe-Längsrichtung.

Bei einem relativ feinen Antriebsprofil eines Verschiebeteiles, das heißt beispielsweise bei einem feinen Gewindeprofil, mit dem sich bei hohen Übersetzungsverhältnissen geringe Verschiebewege erzielen lassen, wird für eine genaue Verschiebewegmessung und Auswertung ein an sich bekannter, äußerst empfindlicher magnetoresistiver Sensor eingesetzt. Ein solcher Sensor ist auch dem Bereich der zweiten Profilierung des Verschiebeteiles zugeordnet, wobei die zweite Profilierung dem gleichen Anforderungsprofil genügen muß wie das zuvor beschriebene Antriebsprofil.

Diese Sensoren werden jeweils in ein Magnetfeld eingesetzt, dessen Ausbildung unter anderem von der Lage des Verschiebeteiles abhängig ist. Hierzu ist jeder der einzelnen Sensoren derart auf die Oberfläche des Antriebsprofiles, beispielsweise ein Feingewinde der Spindel eines Spindeltriebs beziehungsweise der zweiten Profilierung ausgerichtet, daß ein Verschieben der Gewindeprofilflanken beziehungsweise der zweiten Profilierung durch das Magnetfeld eine elektronische Erfassung und Abbildung der erfolgten Verschiebung ermöglicht. Elektronische Erfassung und Abbildung der Verschiebung des Antriebsprofils der Spindel bedeutet, daß die an den Sensoren vorbeigeschobenen Spitzen und Täler des Antriebsprofils der Spindel beziehungsweise des Spindelbereiches mit der zweiten Profilierung entsprechend erfaßt und ausgewertet werden. Damit ist auf recht einfache Weise eine absolute Positionsbestimmung des Verschiebeteiles möglich.

Wird ein Linearantrieb über einen elektrischen Servomotor, der ein bürstenloser permanentmagneterregter Servomotor ist, angetrieben, so kann bei einem sehr spielarmen Linearantrieb der zur Weg- und Positionsmessung eingesetzte Magnetfeldsensor gleichzeitig zur Kommutierung dieses Motors eingesetzt werden.

Im übrigen können die mit der erfindungsgemäßen Weg- und/oder Positionserfassungseinrichtung ermittelten Werte zur Steuerung und Regelung des Motors des Linearantriebes, der insbesondere ein Elektromotor ist, herangezogen werden.

Magnetoresistive Magnetfeldsensoren als magnetoresistive Längenmeßelemente einzusetzen, ist an sich bekannt. Hierzu wird beispielsweise auf folgende Literaturstellen verwiesen: "in Nanometerschritten", Konstruktion & Elektronik, Nr. 26/27 vom 16.12.1992, Seite 8; digitale Längen- und Winkelmeßtechnik", verlag moderne industrie, 2. Auflage 1991; F. Dettmann, U. Loreit "Positionsmessung mit magnetoresistiven Sensoren" Symposium magnetoresistive Sensoren 25.06.92 in Dortmund.

Anhand gezeichneter Modelle und verschiedener Funktionsdiagramme wird die Erfindung nachfolgend noch weiter erläutert und dabei auch ein besonders vorteilhaftes Ausführungsbeispiel angeben.

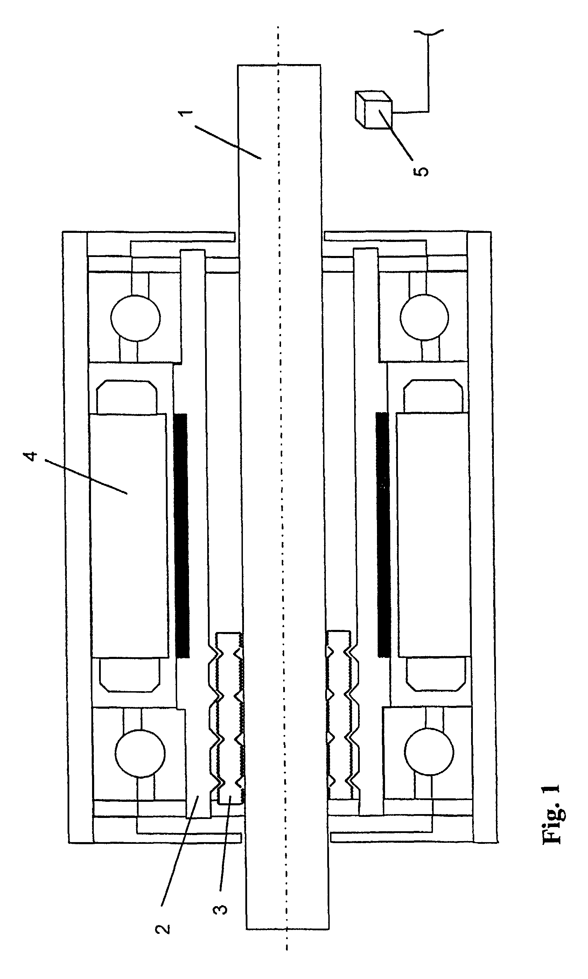

In der Zeichnung zeigen
- Fig. 1: eine schematische Schnittdarstellung eines Planeten-Rollspindeltriebs als Linearantriebs-Einrichtung,
- Fig. 2: die Anordnung eines Magnetfeldsensors mit Bezug auf das Profil einer Spindel mit qualitativer Darstellung des Magnetfeldes,
- Fig. 3: ein Diagramm mit einer elektronischen Abbildung der Abstände der Profilspitzen einer längsverschobenen Spindel,
- Fig. 4: die Anordnung von zwei Magnetfeldsensoren mit Bezug auf eine durch eine Mitnehmer-Spindel verlängerte Spindel mit unterschiedlichen Steigungen beider Spindeln als bevorzugtes Ausführungsbeispiel der Erfindung,
- Fig. 5: ein Diagramm mit den elektronischen Abbildungen der Abstände der Profilspitzen der eigentlichen Spindel einerseits und der Mitnehmer-Spindel andererseits aus dem Ausführungsbeispiel nach Fig. 4.

Der hier als ein Erläuterungs-Beispiel für einen Linearantrieb beschriebene Spindeltrieb ist ein Planeten-Rollspindeltrieb wie ein solcher beispielsweise aus EP 0 320 621 B1 bekannt ist. Im einzelnen besteht er aus einer Gewindespindelstange 1, die von einer ortsfest gelagerten Spindelmutter 2 über zwischengeschaltete Planetenrollen 3 angetrieben wird. Die Spindelstange 1 ist mit einem Feingewinde versehen. Die Spindelmutter 2 besitzt eine grobe Rillierung. Die Planetenrollen 3 besitzen überlappend eine feine in das Gewinde der Spindelstange 1 eingreifende Rillierung sowie eine grobe in die Spindelmutter 2 eingreifende Rillierung. Die Spindelstange 1 ist drehfest gelagert und führt somit bei angetriebener Spindelmutter 2 eine Linearbewegung aus. Die Spindelmutter 2 ist Bestandteil des Rotors eines in den Spindeltrieb integrierten elektrischen AC-Servomotors, der ein bürstenloser permanentmagneterregter Servomotor 4 ist.

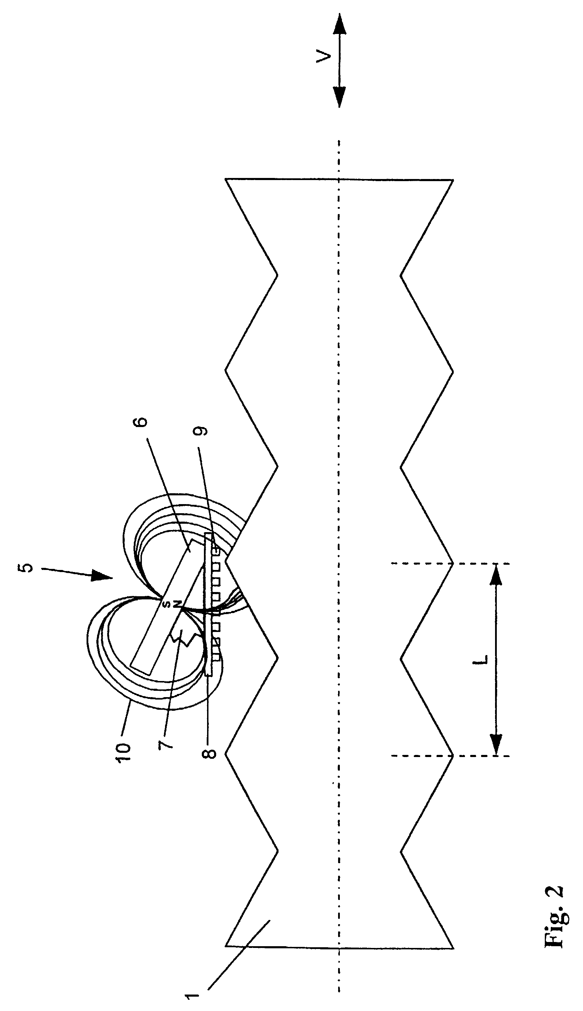

Zur Erfassung des Verschiebeweges der Spindelstange 1 ist ein radial auf diese gerichteter magnetoresistiver Sensor 5 vorgesehen. Den speziellen Aufbau dieses Sensors 5 und dessen Anordnung mit Bezug auf die Spindelstange 1 lassen sich der Fig. 2 entnehmen.

Danach besteht der Sensor 5 aus einem Permanentmagnet 6, der mittels Klebstoff 7 an einem plattenförmigen Trägersubstrat 8 befestigt ist, sowie einer magnetoresistiven Sensoraktivschicht 9. Die Sensoraktivschicht 9 ist auf der der Spindelstange 1 zugewandten Seite des plattenförmigen Trägersubstrats 8 angebracht, während sich der Permanentmagnet 6 auf der gegenüberliegenden Seite befindet. Das plattenförmige Trägersubstrat 8 verläuft etwa parallel zur Achse der Spindelstange 1. Die Polachse des Permanentmagneten 6 ist in einem stumpfen Winkel gegenüber der Achse der Spindelstange 8 geneigt. Der Nord- und Südpol des Permanentmagneten 6 ist mit N bzw. S angegeben. Unter Einbeziehung des Gewindeprofils der aus magnetisierbarem Material bestehenden Spindelstange 1 erzeugt der Permanentmagnet 6 ein Magnetfeld 10.

Dieses Magnetfeld 10 ist durch die eingetragenen kreisförmig verlaufenden Feldlinien qualitativ angedeutet. Die Verschieberichtung der Spindelstange 1 ist mit einem Doppelpfeil V angegeben. Der Abstand zweier aufeinanderfolgender Profilspitzen der Gewindestange 1 ist als L definiert.

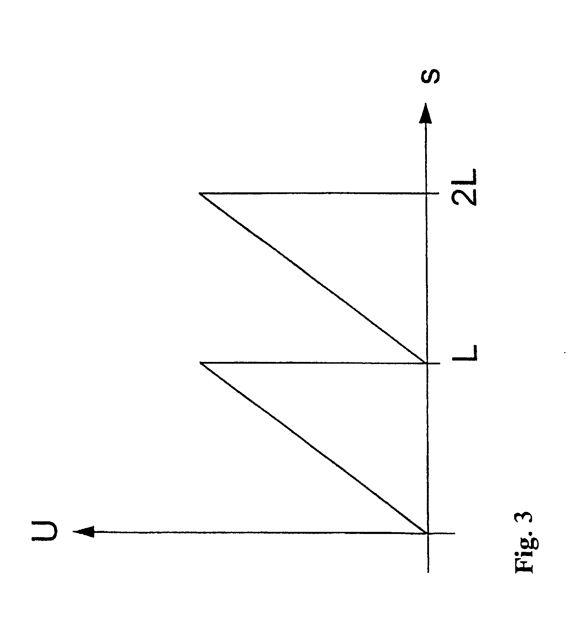

Bei einem Durchlaufen des Magnetfeldes 10 des ortsfest angebrachten Sensors 5 erzeugt die verdrehungsfrei gelagerte Spindelstange 1 eine Art elektronische Abbildung der Abstände der Gewindeprofilspitzen entsprechend der Darstellung in dem Diagramm der Fig. 3. Dort geben s den Verschiebeweg der Spindelstange 1 und U die elektrische Spannung einer an den magnetoresistiven Sensor 5 angeschlossenen Auswerteelektronik an. Bei der Auswertung der Meßsignale wird eine arc-tan-Interpolation vorgenommen.

Wie eine solche elektronische Abbildung mit einem magnetoresistiven Sensor 5 im einzelnen praktisch erzeugt werden kann, ist Stand der Technik, weshalb hierauf an dieser Stellen nicht näher eingegangen werden muß. Auf die weiter oben bereits angegebenen Literaturbeispiele wird hier nochmals ausdrücklich verwiesen.

Durch Ausgehen von einer Nullposition der Spindelstange 1 und stetem Zählen der Gewindespitzen und -täler, die bei einem Verschieben der Spindelstange 1 längs des Sensors 5 elektronisch abgebildet werden (Inkrementalverfahren), läßt sich in bekannter Weise mit Hilfe eines elektronischen Speichers nicht nur der jeweilige relative Verschiebeweg der Spindelstange 1, sondern auch deren absolute Axial-Position erfassen und angeben.

Für eine absolute axiale Positionsmessung der Spindelstange 1 ist ein Einsatz von jeweils zwei magnetoresistiven Sensoren erforderlich. Davon ist einer dem Gewindeprofil der Spindelstange 1 über ein Magnetfeld zugeordnet und auf die Steigung dieses Gewindeprofiles abgestimmt. Der zweite Sensor ist als Zusatzsensor 11 ebenfalls über ein Magnetfeld einem fest mit der Spindelstange 1 verbundenen Mitnehmer mit einem Gewinde mit einer von der Spindelstange 1 abweichenden Steigung zugeordnet.

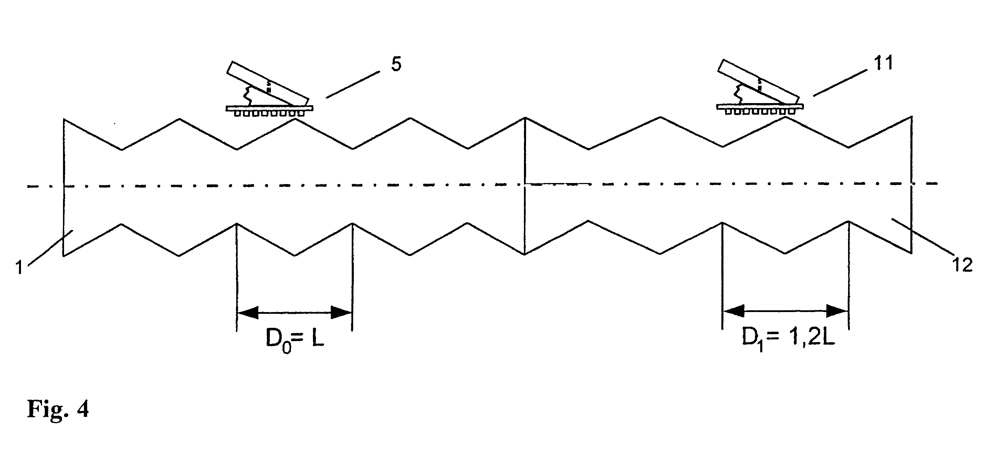

Ein erfindungsgemäßes Ausführungsbeispiel hierzu zeigt Fig. 4, in der der Mitnehmer eine axiale Verlängerung in der Form einer Mitnehmer-Spindel 12 ist. Diese Mitnehmer-Spindel 12 kann ein einstückiger Bestandteil der Spindelstange 1 sein und sich von dieser lediglich durch eine geringfügig abweichende Steigung unterscheiden. Die unterschiedlichen Steigungen sind in Fig. 4 mit Dₒ = L bei der Spindelstange 1 und mit D₁ = 1,2 L bei der Mitnehmer-Spindel 12 eingetragen.

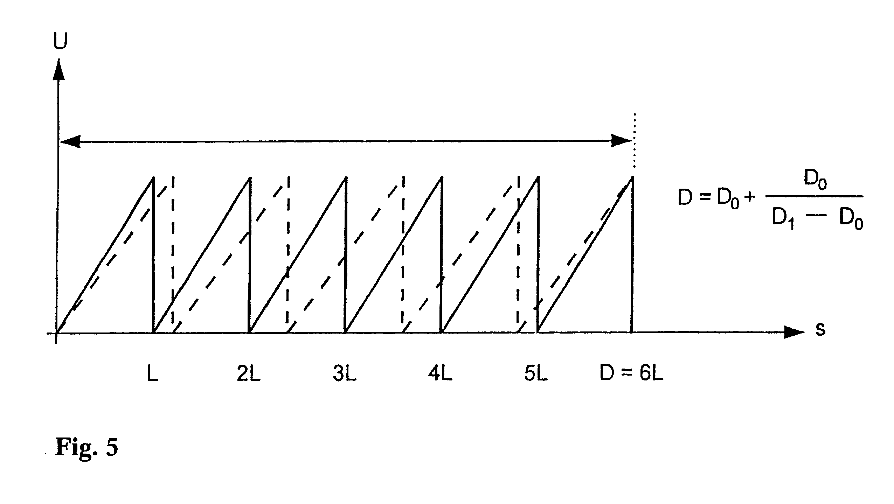

Durch Überlagerung der jeweils ermittelten elektronischen Abbildungen der Verschiebewege läßt sich eine absolute Position der Spindelstange 1 über eine bestimmte Verschiebeweglänge D ermitteln. Zur Erklärung wird auf die elektronischen Abbildungen der über die beiden Sensoren 5 und 11 ermittelten elektronisch ausgewerteten Meßwertkurven und deren Überlagerung gemäß der Darstellung in Fig. 5 verwiesen. Dort sind die elektronischen Auswertekurven der beiden Sensoren 5 und 11 in einem der Fig. 4 entsprechenden Weg (s)-Spannungs(U)-Diagramm eingetragen. Bei einer Steigung von D₁ = 1,2 L = 1,2 D₀ der Mitnehmer-Spindel 12 gegenüber Dₒ = L der Spindelstange 1 stellt sich erst nach einem Verschiebeweg der Spindelstange 1 von D = 6 L eine deckungsgleiche Signalauswertung bezüglich der Meßsignale aus den beiden Sensoren 5 und 11 ein. Dies bedeutet, daß innerhalb des Bereiches D bei einem Überlagern der Signalauswertungen beider Sensoren 5, 11 jedem zurückgelegten Verschiebeweg ein eindeutiger Wert zugeordnet werden kann. Der Bereich D, innerhalb dessen dies möglich ist, errechnet sich aus D = Dₒ + [Dₒ : (D₁ - Dₒ)]. Daraus ergibt sich, daß der Wert von D mit verringerter Differenz von D₁ und D₀ zunimmt. Bei einer kleinen Steigungsdifferenz bei den beiden Spindeln 1 und 12 kann somit ein relativ großer Bereich D erzielt werden, innerhalb dessen absolut definierte Spindelpositionen direkt erfaßbar sind.

Bei einem praktisch spielfreien Spindeltrieb kann der magnetoresistive Sensor 5 unter anderem auch zur Kommutierung des Servomotors 4 verwendet werden. Hierdurch kann ein sonst für die Kommutierung erforderlicher Sensor eingespart werden. Da der magnetoresistive Sensor sehr klein ausführbar ist, kann er innerhalb des Spindeltriebes direkt an bzw. innerhalb des Servomotors 4 eingebaut sein. Ein erfindungsgemäßer magnetoresistiver Sensor 5 mißt in allen Richtungen nur wenige Millimeter und zwar einschließlich des in der Regel mit diesem direkt verbundenen Permanentmagneten.

Mit den Meßsignalen des Sensors 5 kann der Spindeltrieb elektronisch gesteuert und geregelt werden.

## Patentansprüche

1. Linearantrieb mit einer Einrichtung zur Erfassung des Verschiebeweges und/oder der Verschiebeposition eines verdrehungsfrei bewegten magnetisierbaren Verschiebeteils (1) dieses Linearantriebs mit mindestens zwei magnetoresistiven Sensoren (5) innerhalb eines von dem Verschiebeteil (1) beeinflußten Magnetfeldes, wobei die Meßwerterfassung und Auswertung des Sensors (5) auf ein Oberflächenprofil des Verschiebeteils (1) abgestimmt sind, das in Verschieberichtung in gleicher Weise aufeinanderfolgende Abschnitte mit jeweils einer solchen gleichen Form in dieser Richtung besitzt, daß jede Verschiebeposition eines das Magnetfeld durchwandernden Abschnittes innerhalb dieses Magnetfeldes einen von dem Sensor (5) erfaßbaren unterschiedlichen Magnetfeldkennwert erzeugt,
**dadurch gekennzeichnet,**
daß diese Einrichtung mindestens zwei magnetoresistive Sensoren (5) umfaßt, von denen einer auf eine erste in Verschiebelängsrichtung regelmäßige Profilierung des Verschiebeteiles (1) abgestimmt und der wenigstens eine andere magnetoresistive Sensor (5) einer abweichenden, in Verschieberichtung regelmäßigen sich in Verschieberichtung an die erste Profilierung anschließenden zweiten Profilierung des Verschiebeteiles (1) zugeordnet ist, wobei beide Sensoren (5) jeweils innerhalb eines zugehörigen von dem Verschiebeteil (1) und dessen Lage beeinflußten Magnetfeldes liegen und wobei ferner das Verschiebeteil (1) als eine mit einem die erste Profilierung bildenden Rillen- oder Gewindeantriebsprofil versehene Spindel oder Hülse ausgebildet ist.

2. Linearantrieb nach Anspruch 1,
**dadurch gekennzeichnet,**
daß diese Einrichtung bei einem Antrieb des Verschiebeteils (1) durch einen elektrischen Servomotor (4) Kommutierungssignale für diesen Servomotor (4) erzeugt.

3. Linearantrieb nach Anspruch 1 oder 2,
**dadurch gekennzeichnet,**
daß mit dieser Einrichtung ein das Verschieben des Verschiebeteils (1) verursachender Antrieb steuer- und/oder regelbar ist.

## Claims

1. Linear drive having a device for registering the displacement travel and/or the displaced position of a magnetizable sliding component (1), which is moved free of torsion, of this linear drive with at least two magneto-resistive sensors (5) within a magnetic field which is influenced by the sliding component (1), the registering of measured values and evaluation of the sensor (5) being matched to a surface profile of the sliding component (1) which has, in the direction of displacement, sections which follow one another in the same way and which each have an identical form in this direction such that each displaced position of a section which migrates through the magnetic field generates within this magnetic field a different magnetic field characteristicvalue which can be registered by the sensor (5), characterized in that this device comprises at least two magneto-resistive sensors (5), one of which is matched to a first type of profiling of the sliding component (1), which type of profiling is regular in the longitudinal direction of displacement, and the at least one other magneto-resistive sensor (5) is assigned to a different second type of profiling of the sliding component (1), which type of profiling is regular in the direction of displacement and follows the first type of profiling in the direction of displacement, the two sensors (5) each lying within an associated magnetic field which is influenced by the sliding component (1) and its position, and the sliding component (1) being additionally implemented as a spindle or sleeve which is provided with a grooved or threaded drive profile which forms the first type of profiling.

2. Linear drive according to Claim 1, characterized in that, when the sliding component (1) is driven by means of an electric servomotor (4), this device generates commutation signals for this servomotor (4).

3. Linear drive according to Claim 1 or 2, characterized in that a drive which causes the sliding component (1) to be displaced can be controlled in open-loop and/or closed-loop terms with this device.

## Revendications

1. Entraînement linéaire comprenant un dispositif pour la détection du trajet de déplacement et/ou de la position de déplacement d'une partie mobile aimantable (1) de cet entraînement linéaire déplacée sans rotation comprenant au moins deux capteurs magnétorésistifs (5) à l'intérieur d'un champ magnétique influencé par la partie mobile (1), la détection des valeurs de mesure et l'évaluation par le capteur (5) étant accordées sur le profil de surface de la partie mobile (1) qui comporte dans la direction de déplacement des tronçons qui se suivent les uns les autres de manière similaire, ayant chacun dans cette direction une forme similaire telle que chaque position de déplacement d'un tronçon traversant le champ magnétique produit à l'intérieur de ce champ magnétique un paramètre de champ magnétique détectable par le capteur, caractérisé en ce que ce dispositif comprend au moins deux capteurs magnétorésistifs (5) dont l'un est accordé sur un premier profil régulier dans la direction longitudinale de déplacement de la partie mobile (1) et l'autre (ou les autres) capteur magnétorésistif (5) est associé à au moins un deuxième profil différent de la partie mobile (1) régulier dans la direction de déplacement, faisant suite au premier profil dans la direction de déplacement, les deux capteurs se trouvant chacun à l'intérieur d'un champ magnétique propre influencé par la partie mobile et par sa position et la partie mobile (1) étant en outre formée comme broche ou comme manchon pourvu d'un profil d'entraînement cannelé ou fileté formant le premier profil.

2. Entraînement linéaire selon la revendication 1, caractérisé en ce que ce dispositif, dans le cas d'un entraînement de la partie mobile (1) par un servomoteur électrique (4), produit des signaux de commutation pour ce servomoteur.

3. Entraînement linéaire selon la revendication 1 ou 2 caractérisé en ce qu'avec ce dispositif un entraînement provoquant le déplacement de la partie mobile peut être commandé et/ou régulé.
